# FASCICULE DE BREVET EUROPEEN

(11) **EP 3 406 074 B1**
(45) Date de publication et mention de la délivrance du brevet: **04.12.2019**
(21) Numéro de dépôt: 17700356.3
(22) Date de dépôt: 13.01.2017
(51) Int. Cl.: H04N 5/355, H04N 5/3745

(54) **PROCÉDÉ DE COMMANDE D'UN CAPTEUR D'IMAGE À PIXELS ACTIFS**
VERFAHREN ZUR STEUERUNG EINES AKTIVEN PIXELBILDSENSORS
CONTROL METHOD FOR AN ACTIVE PIXEL IMAGE SENSOR

(30) Priorité: 19.01.2016 FR 1650415
(43) Date de publication de la demande: 28.11.2018
(73) Titulaire: Teledyne E2V Semiconductors SAS, 38120 Saint-Egrève (FR)
(72) Inventeur: MAYER, Frédéric, 38500 Voiron (FR); BARBIER, Frédéric, 38120 Fontanil-Cornillon (FR); GESSET, Stéphane, 38380 Saint Laurent du Pont (FR)
(74) Mandataire: Desvignes, Agnès
(86) Numéro de dépôt international: PCT/EP2017/050633
(87) Numéro de publication internationale: WO 2017/125316

(56) Documents cités:
- US-A1- 2009 101 796
- US-A1- 2014 015 012

## Description

### DOMAINE TECHNIQUE

L'invention concerne les capteurs d'image électronique fonctionnant à partir de pixels actifs en technologie MOS. Plus précisément, l'invention concerne un procédé de commande des différents transistors qui constituent le pixel actif.

### ETAT DE LA TECHNIQUE

Les pixels actifs comprennent le plus souvent une photodiode transformant en charges électriques les photons reçus, et plusieurs transistors MOS permettant de contrôler la lecture de ces charges et leur conversion en tension électrique. Dans un capteur matriciel, les lignes de pixels sont adressées individuellement et les tensions issues des pixels sont appliquées à des conducteurs de colonne communs aux pixels d'une même colonne. Des circuits de lecture en pied de colonne permettent d'échantillonner, pour chaque ligne de pixels adressée, les tensions présentes sur les colonnes. Les échantillons sont stockés dans des capacités du circuit de lecture. Les échantillons sont ensuite convertis en numérique par un convertisseur analogique-numérique (par exemple un convertisseur pour chaque colonne de pixels).

Les pixels actifs utilisant une photodiode comprennent généralement au moins quatre transistors : un transistor de transfert qui sert à déverser les charges de la photodiode vers un nœud dit de lecture, qui est un nœud capacitif de stockage de charges ; un transistor de lecture qui est monté en suiveur de tension et dont la grille est reliée au nœud de lecture pour établir sur sa source une tension représentant la tension de ce nœud ; un transistor de sélection de ligne commandé par un conducteur de ligne prévu pour sélectionner toute une ligne de pixels, et ce transistor de sélection permet de relier la sortie du transistor suiveur du pixel au conducteur de colonne correspondant et par là, au circuit de lecture en pied de colonne ; et un transistor de réinitialisation permettant de rétablir le potentiel du nœud de lecture à une valeur de référence.

Ces structures de pixels actifs permettent de réaliser une capture d'image par la technique dite "global shutter" : tous les pixels intègrent des charges générées par la lumière pendant une période d'intégration commune à tous les pixels. Les pixels sont ensuite lus séquentiellement ligne après ligne. Cette technique de capture est avantageuse par rapport à la technique d'intégration à fenêtre glissante dite "rolling shutter" car elle permet notamment d'éviter des effets de distorsion lorsque l'on capture des images d'objets en mouvement.

La séquence de commande des pixels pendant la phase d'intégration commune est la suivante :
- le temps d'une impulsion de commande d'initialisation, on force l'évacuation des charges dans toutes les photodiodes. La fin de l'impulsion fixe le début de la période d'intégration des photodiodes : elles peuvent à nouveau accumuler les charges générées sous l'effet de la lumière à laquelle elles sont exposées. Ceci peut être obtenu en rendant conducteurs simultanément, le temps de l'impulsion d'initialisation, le transistor de transfert et le transistor de réinitialisation du nœud de lecture, et les charges sont alors évacuées par le drain du transistor de réinitialisation. Mais on préfère généralement utiliser un cinquième transistor spécifique pour la réinitialisation des photodiodes, dont la source est reliée à la photodiode du pixel, et les charges sont évacuées vers le drain de ce transistor.
- on rend conducteur tous les transistors de transfert simultanément, le temps d'une impulsion de commande appliquée sur leur grille : les charges accumulées par chaque photodiode depuis le début de la période d'intégration courante se déversent dans le nœud de lecture associé. La fin de cette impulsion de commande de transfert fixe la fin de la période d'intégration pour tous les pixels.

Après chaque période d'intégration, la phase de lecture des pixels peut commencer. C'est une lecture séquentielle des pixels, ligne après ligne. Pour chacun des pixels d'une ligne, on rend conducteur le transistor de sélection du pixel, le temps d'une impulsion de commande de sélection, et dans ce temps :
- on échantillonne le niveau de signal qui s'établit sur le conducteur de colonne dans le circuit de lecture en pied de colonne du pixel ; puis
- on rend conducteur, le temps d'une impulsion de commande de réinitialisation, le transistor d'initialisation du nœud de lecture et on échantillonne dans le circuit de lecture le niveau de référence qui s'établit sur le conducteur de colonne.

Le circuit de lecture fournit en sortie pour chaque pixel, une mesure de la différence entre le niveau de signal et le niveau de référence du pixel. Mais ce niveau n'est pas une mesure précise de la quantité de charges générées dans la photodiode car le bruit aléatoire dit kTC n'est pas éliminé. En effet, ce bruit est généré par la réinitialisation du nœud de lecture par le transistor de réinitialisation et se traduit par le fait que le potentiel auquel le nœud de lecture s'établit n'est pas tout à fait certain. Pour pouvoir éliminer cette incertitude, permettant la mesure précise de la quantité de charges générées dans la photodiode du pixel pour la période d'intégration concernée, il faut pouvoir d'abord initialiser le nœud de lecture pour échantillonner le niveau de potentiel de référence, et seulement après établir le niveau de signal (transfert) pour l'échantillonner. C'est la lecture à double échantillonnage corrélé, dit "CDS". On ne sait pas faire cela avec la structure à 4 ou 5 transistors que l'on vient de présenter, lorsque l'on effectue une séquence d'intégration commune sur tous les pixels en même temps.

C'est ainsi qu'on a pu proposer dans l'art antérieur des structures comportant un nœud mémoire entre la photodiode et le nœud de lecture. Le nœud mémoire va permettre de conserver les charges générées par la photodiode après chacune des périodes d'intégration communes à tous les pixels, le temps dans chaque ligne de pixels, d'initialiser le nœud de lecture des pixels, d'échantillonner le niveau de référence correspondant dans le circuit de lecture de chacun des pixels de la ligne, puis de déverser les charges du nœud mémoire dans le nœud de lecture et d'échantillonner le niveau de signal dans le circuit de lecture. La structure d'un pixel actif correspondant comprend alors deux transistors (ou grilles) de transfert, un premier entre la photodiode et le nœud mémoire, et un deuxième entre le nœud mémoire et le nœud de lecture. Le premier transistor de transfert entre la photodiode et le nœud mémoire est alors celui qui commande la fin de chaque période d'intégration pour tous les pixels en même temps, fin qui coïncide avec la fin de l'impulsion de commande de transfert dans le nœud mémoire. Le deuxième transistor de transfert sert dans la phase de lecture séquentielle des lignes de pixels.

Ces structures de pixels actifs qui ont été proposées, par exemple dans les publications FR2961631 et JP20063115150, pour permettre de combiner une prise d'image par tous les pixels simultanément, dans la même période d'intégration et une lecture "CDS" des pixels, ligne par ligne, offrent ainsi une dynamique vers le bas qui est optimisée, puisqu'elles sont à faible bruit de lecture (lecture CDS).

Mais on cherche également à améliorer la dynamique des pixels vers le haut, pour les fortes ambiances lumineuses et ceci sans augmenter la taille des pixels, qui est principalement déterminée par la surface occupée par la photodiode.

Une solution proposée consiste à utiliser une capture successive de plusieurs images avec des temps d'intégration différents, et pour chaque pixel, déterminer le signal le mieux adapté parmi les signaux obtenus. Mais cela augmente le temps global d'acquisition et de traitement. Une autre solution consiste à déterminer le temps mis par un pixel pour arriver à saturation pour en déduire une information sur le niveau de lumière en cas d'éclairements saturants. Cela suppose des pixels de structure plus complexe et un traitement associé. Une autre solution utilise le transistor d'initialisation des photodiodes pendant la période d'intégration, pour permettre l'évacuation de charges en excès dans la photodiode, en polarisant la grille de ce transistor à une tension déterminée sous le seuil de conduction de transistor, pour ajuster le potentiel de la barrière de la région semi-conductrice sous la grille. La réponse du pixel devient alors logarithmique à partir d'un certain seuil de luminosité. Mais cette solution est sensible aux dispersions technologiques (tensions de seuil des transistors, potentiel à vide des photodiodes). Le brevet US2009/0101796 (Ladd et al) propose d'utiliser une grille de transfert pour permettre, entre deux périodes d'intégration successives, une évacuation de charges contenues dans la photodiode au-delà d'un seuil barrière fixé par la tension de grille, ce seuil pouvant être fixé pixel par pixel par une technique de calibration. La lecture du pixel est effectuée à la fin de la deuxième période d'intégration, et ensuite on linéarise le signal. Dans le brevet US2014/0015012 (Oike) on vient lire le signal qui correspond à la quantité de charges évacuées par l'opération d'écrêtage conduite après la première période d'intégration, pet ce signal vient augmenter le signal lu après la deuxième période d'intégration.

### RESUME DE L'INVENTION

L'invention propose un autre procédé qui permet d'étendre la dynamique du capteur sans modifier ni la structure des pixels ni leur taille. Plus précisément, il propose d'effectuer au cours de la période d'intégration commune aux pixels, au moins un transfert des charges de la photodiode dans le nœud mémoire via le premier transistor de transfert, avec un écrêtage de la quantité de charges contenues dans le nœud mémoire par rapport à un seuil fixé par le deuxième transistor de transfert, permettant un changement de pente de la courbe de réponse au-delà d'une intensité de flux lumineux correspondant à ce seuil d'écrêtage de charges.

L'invention concerne un procédé de commande d'un pixel actif dans un capteur d'image, la structure de pixel actif comprenant un élément photosensible, un nœud de lecture et un nœud mémoire entre l'élément photosensible et le nœud de lecture, un premier transistor de transfert de charges entre l'élément photosensible et le nœud mémoire et un deuxième transistor de transfert de charges entre le nœud mémoire et le nœud de lecture, un transistor suiveur dont la grille est reliée au nœud de lecture et au moins un transistor d'initialisation du nœud de lecture.

A chaque nouvelle période d'intégration, le procédé de commande comprend les étapes suivantes, appliquées à tous les pixels simultanément :
- application sur la grille de tous les premiers transistors de transfert
   - d'au moins un premier créneau de tension à un temps intermédiaire entre le début et la fin de la période d'intégration, commandant un déversement intermédiaire des charges de la photodiode dans le nœud mémoire ; et
   - d'un créneau de tension final à la fin de la période d'intégration, commandant un déversement final des charges de la photodiode dans le nœud mémoire ;
- application sur la grille de tous les deuxièmes transistors de transfert, d'un deuxième créneau de tension après chaque premier créneau de tension et avant le créneau de tension final et le deuxième créneau de tension fixe une hauteur de barrière de potentiel sous la grille desdits deuxième transistors par rapport au potentiel du nœud mémoire, permettant un écrêtage des charges dans ledit nœud mémoire au-delà d'une quantité de charges maximale pouvant être maintenue dans ledit nœud mémoire.

De préférence, le procédé comprend l'application de N premiers et deuxièmes créneaux par période d'intégration, N entier, au moins égal à 1, et les N premiers créneaux de tension appliqués pendant une période d'intégration, découpent ladite période d'intégration en N+1 durées d'intégration successives, de plus en plus courtes, et les N deuxièmes créneaux de tension associés définissent N seuils d'écrêtage dans le nœud mémoire qui vont croissants sur la période d'intégration.

N est avantageusement choisi égal à 2. Ou bien, N est fixé en fonction d'une mesure de l'ambiance lumineuse, de préférence à une valeur choisie parmi les valeurs 1 et 2.

Dans une variante, le moment d'application de chaque premier créneau et/ou le seuil d'écrêtage associé à chaque deuxième créneau sont déterminés en fonction d'une mesure de l'ambiance lumineuse.

Dans la phase de lecture de chacun des pixels d'une ligne, le procédé effectue avantageusement un double échantillonnage corrélé pour chaque pixel, avec un premier échantillonnage d'un niveau de référence, correspondant à une initialisation du nœud de lecture, puis une deuxième échantillonnage d'un niveau de signal correspondant aux charges contenues dans le nœud mémoire à la fin de la période d'intégration et qui ont été transférées pour la lecture dans le dit nœud de lecture.

L'invention concerne également un capteur d'image comprenant au moins une ligne de pixels actifs, avec une structure de pixel comprenant un nœud mémoire entre un élément photosensible et un nœud de lecture du pixel, avec un premier transistor de transfert de charges prévu entre l'élément photosensible et le nœud mémoire et un deuxième transistor de transfert de charges prévu entre le nœud mémoire et le nœud de lecture, et un circuit de séquencement des signaux nécessaires à une prise d'image comprenant une période d'intégration commune à tous les pixels, et une phase de lecture des pixels de chaque ligne successivement, et le circuit de séquencement est configuré pour mettre en œuvre un tel procédé de commande.

D'autres caractéristiques et avantages de l'invention sont présentés dans la description suivante, en référence aux dessins annexés dans lesquels :
- la figure 1 illustre une structure générale d'un pixel actif à laquelle l'invention peut s'appliquer ;
- la figure 2 est un chronogramme des signaux de commande d'un pixel pendant un cycle de prise d'image, dans un premier exemple de mise en œuvre de l'invention implémentant un (1) transfert/écrêtage par cycle;
- les figures 3a à 3h montrent pour chacune des phases 1 à 8 de la période d'intégration du cycle, les diagrammes des potentiels correspondants dans la structure du pixel ; et
- la figure 4, la courbe de réponse correspondante d'un pixel, montrant la quantité de charges au nœud de lecture en fonction du flux lumineux;
- les figures 5a à 5c montrent pour chacune des phases 9 à 11 de la séquence de lecture CDS d'un pixel, les diagrammes des potentiels correspondants dans la structure du pixel ;
- les figures 6 et 7 montrent le chronogramme de signaux et la courbe de réponse correspondante pour le pixel, pour un autre exemple de mise en œuvre implémentant deux transferts/écrêtage par cycle de prise d'image.

### DESCRIPTION DETAILLEE

L'invention porte sur un procédé de prise d'image par un capteur d'image à pixels actifs, avec une structure de pixel qui comprend un nœud mémoire entre la photodiode et le nœud de lecture. Il convient ainsi de décrire en détail une telle structure, afin de pouvoir ensuite expliquer le procédé de l'invention.

### STRUCTURE DES PIXELS

Les pixels actifs sont réalisés en technologie CMOS dans une couche active semi-conductrice dopée (par exemple dopée P) et comprennent en plus des photodiodes, qui sont en principe des photodiodes auto polarisées dites "pinned", des nœuds de stockage capacitifs et des transistors. Leurs réalisations utilisent les diverses technologies CMOS bien connues de l'homme de l'art. On se place dans le contexte d'un substrat de couche active semi-conductrice dopée P, polarisé à un potentiel de référence zéro et dont les circuits sont alimentés par une tension d'alimentation positive, notée Vdd. Les différents transistors des pixels sont de type NMOS, avec des régions de source et de drain qui sont des diffusions de type N de part et d'autre d'un canal de type P, sous la grille. L'homme du métier saura faire les adaptations nécessaires dans un contexte de substrat de couche active semi-conductrice dopée N.

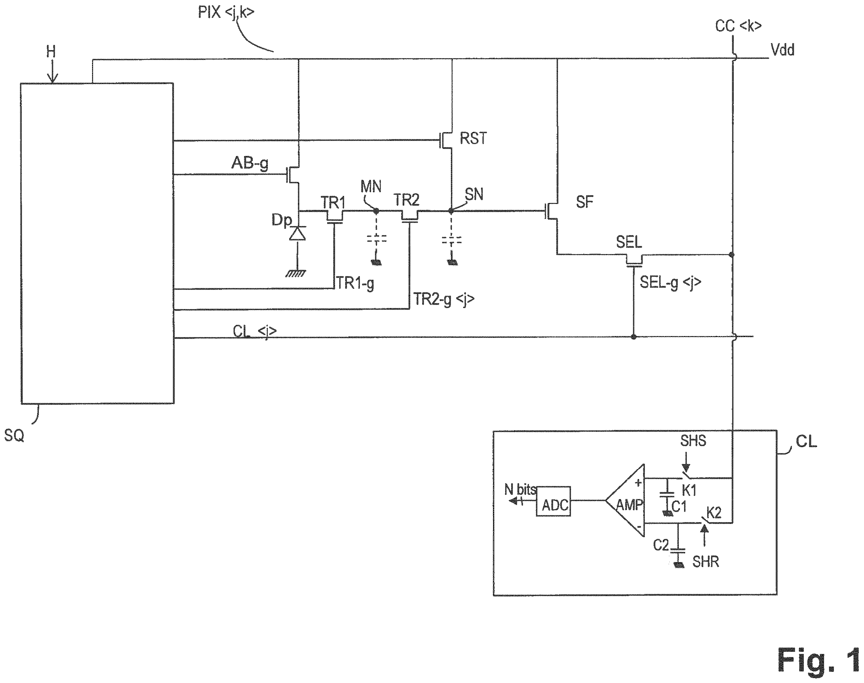

La figure 1 est un schéma électrique d'un exemple de constitution d'un pixel actif à nœud mémoire entre un élément photosensible et un nœud de lecture : le pixel PIX comprend une photodiode Dp, un nœud mémoire MN qui est un nœud de stockage capacitif, un nœud de lecture SN, qui est également un nœud de stockage capacitif, et un premier transistor de transfert TR1 entre la photodiode Dp et le nœud mémoire MN et un deuxième transistor de transfert TR2 entre le nœud mémoire MN et le nœud de lecture SN.

Le pixel comprend également de manière classique un transistor de réinitialisation RST du nœud de lecture SN, dont la source est électriquement reliée au nœud de lecture et le drain est relié à la tension d'alimentation positive Vdd ; un transistor suiveur SF, dont la grille est électriquement reliée au nœud de lecture SN, et le drain est polarisé à la tension d'alimentation Vdd. Dans l'exemple, le pixel comprend un transistor de sélection SEL dont la grille est reliée à un conducteur de ligne CL permettant la sélection de la ligne du pixel, dont le drain est électriquement relié à la source du transistor suiveur et dont la source est reliée à un conducteur de colonne CC de la matrice (les pixels étant organisés sous forme de matrice, en n lignes de rang j égal 1 à n, et m colonnes de rang k égal 1 à m), chaque conducteur de colonne CC étant relié en pied de colonne, à un circuit de lecture CR commun à tous les pixels de la colonne.

Dans l'exemple, un sixième transistor AB est également prévu, qui permet l'initialisation de la photodiode, par évacuation des charges par son drain. Quand il n'est pas prévu, l'initialisation des photodiodes sera obtenue en activant (c'est-à-dire en rendant conducteurs) ensemble les transistors TR1, TR2 et RST dans chaque pixel.

En pratique, ces transistors ne sont pas nécessairement tous constitués de manière classique, indépendamment des autres éléments du pixel, avec une région de source, une région de drain, une région de canal séparant la source du drain et une grille isolée au-dessus du canal, comme représenté sur la figure 1. Certains transistors sont en réalité constitués essentiellement par une grille isolée à laquelle on peut appliquer un potentiel de commande. Ainsi, par exemple, le premier transistor de transfert TR1 peut être constitué par une simple grille de transfert TR1-g isolée du substrat, surmontant une région de canal de type P qui est située entre la région N de photodiode Dp (source de TR1) et la région N du nœud mémoire MN (drain de TR1). De même : le deuxième transistor de transfert TR2 peut être constitué par une simple grille de transfert TR2-g isolée du substrat, surmontant une région de canal de type P qui est située entre la région N du nœud mémoire MN (source de TR2) et la région N du nœud de lecture SN (drain de TR2). Egalement la source du transistor AB d'initialisation peut-être la région N de la photodiode qui accumule des charges générées par la lumière ; et la source du transistor RST peut être la région N du nœud de lecture. Dans la suite des explications, on pourra utiliser le terme "grille" pour désigner ces transistors.

Enfin certains au moins des transistors peuvent être communs à plusieurs pixels. Notamment le transistor de sélection SEL, le transistor suiveur SF et/ou le transistor d'initialisation AB des photodiodes peuvent être communs à plusieurs ou tous les pixels. Egalement le transistor d'initialisation AB peut ne pas être prévu, comme déjà dit. Enfin, le transistor de sélection peut également ne pas être présent, la fonction de sélection étant alors assurée via le transistor de reset, par une commande de la tension de polarisation de drain apte à bloquer le transistor suiveur en dehors des phases de lecture. Dans ce cas la source du transistor suiveur est directement reliée au conducteur colonne. Toutes ces variantes de structure de pixels actifs sont connues de l'homme de l'art. L'invention qui va être expliquée par rapport à la structure de la figure 1 s'applique aussi bien à ces différentes variantes.

La photodiode Dp des pixels est habituellement une photodiode auto polarisée à une tension notée Vpin définie par la technologie, c'est-à-dire qu'elle comporte sur la région diffusée de type N, une région diffusée superficielle de type P et la région superficielle est portée au potentiel de référence (zéro) du substrat. Pour une technologie donnée, la capacité de stockage de la photodiode est définie par sa surface.

Le nœud de lecture SN est généralement constitué par une région semi-conductrice dopée N à potentiel flottant. La capacité de stockage de charges de ce nœud de lecture est dimensionnée par sa concentration de dopants et sa géométrie.

Le nœud mémoire doit être réalisé différemment de la diffusion flottante du nœud de lecture, car son potentiel doit pouvoir être fixé de manière à permettre son utilisation comme nœud de stockage intermédiaire des charges de la photodiode, à la fin de la période d'intégration, le temps de permettre dans chaque pixel l'échantillonnage préalable, en phase de lecture, du niveau de potentiel de référence du nœud de lecture. Il doit cependant avoir une capacité de stockage équivalente à celle du nœud de lecture. L'homme de l'art a à disposition différentes technologies de nœud mémoire qui permettent cela. Dans un exemple, le nœud mémoire est réalisé par une région semi-conductrice surmontée d'une grille, et cette grille est polarisée à un potentiel qui permet d'établir la région semi-conductrice de nœud mémoire sous la grille à un niveau de potentiel déterminé intermédiaire entre le niveau Vpin de la photodiode et Vdd : on peut ainsi effectuer le déversement des charges de la photodiode dans le nœud mémoire à la fin de la période d'intégration ; et ensuite, le déversement des charges contenues dans le nœud mémoire dans le nœud de lecture, en phase de lecture. Le potentiel appliqué pourrait varier selon la phase concernée, mais pour simplifier les explications qui vont suivre, on considère dans la suite que le potentiel du nœud mémoire MN est à une valeur fixe déterminée V_{MN}. La capacité de stockage de charges du nœud mémoire dépend dans cet exemple de la capacité de grille (donc de sa géométrie), de la concentration de dopants ...etc.

On pourrait utiliser d'autres constitutions de nœud mémoire, comme celles décrites par exemple dans les publications de brevet WO2006130443, US598629, ou FR2961631.

### PROCEDE DE COMMANDE

Une structure de pixel telle que celle qui vient d'être décrite est spécialement adaptée à un procédé de prise d'image dans lequel un cycle de prise d'image comprend une période d'intégration commune à tous les pixels, suivie d'une lecture des pixels ligne par ligne, qui est une lecture CDS, à double échantillonnage corrélé. On précise que les pixels sont habituellement arrangés en une matrice de lignes et colonnes de pixels.

### INTEGRATION

Selon l'invention, on propose d'effectuer au cours de la période d'intégration commune de durée Ti, au moins un transfert de charges de la photodiode vers le nœud mémoire, à un temps intermédiaire entre le début et la fin de la période d'intégration et d'effectuer à la suite de chacun de ces transferts intermédiaires, un écrêtage de la quantité de charges contenues dans le nœud mémoire, par rapport à un seuil déterminé. La photodiode recommence à accumuler les charges à la suite du premier transfert. A la fin de la période d'intégration, ces nouvelles charges sont transférées dans le nœud mémoire, et elles s'ajoutent à celles que le nœud mémoire contenait déjà à la suite du ou des transferts et écrêtages effectués au cours de la période d'intégration. Le transfert de charges dans le nœud mémoire à un temps intermédiaire est commandé par l'application d'un premier créneau de tension sur la première grille de transfert. L'écrêtage des charges contenues dans le nœud mémoire est obtenu par l'application après ce premier créneau, d'un deuxième créneau de tension sur la deuxième grille de transfert, et la tension de ce créneau est à un niveau déterminé qui fixe le seuil d'écrêtage, c'est-à-dire la quantité maximale de charges qui pourra être maintenue dans le nœud mémoire, en fixant la hauteur de barrière de potentiel de la région semi-conductrice sous la grille des deuxièmes transistors de transfert par rapport au potentiel du nœud mémoire.

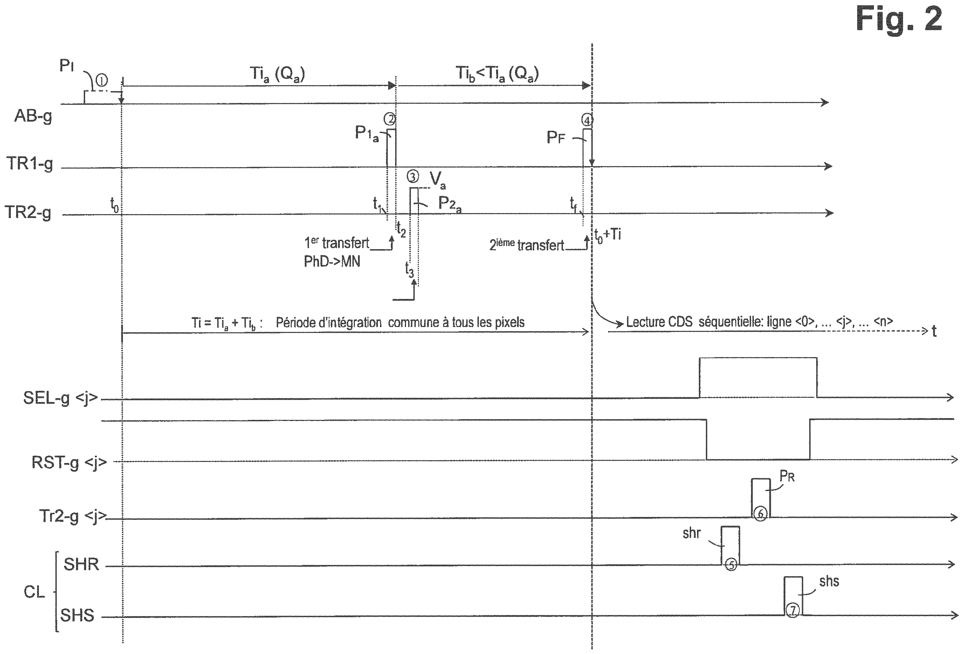

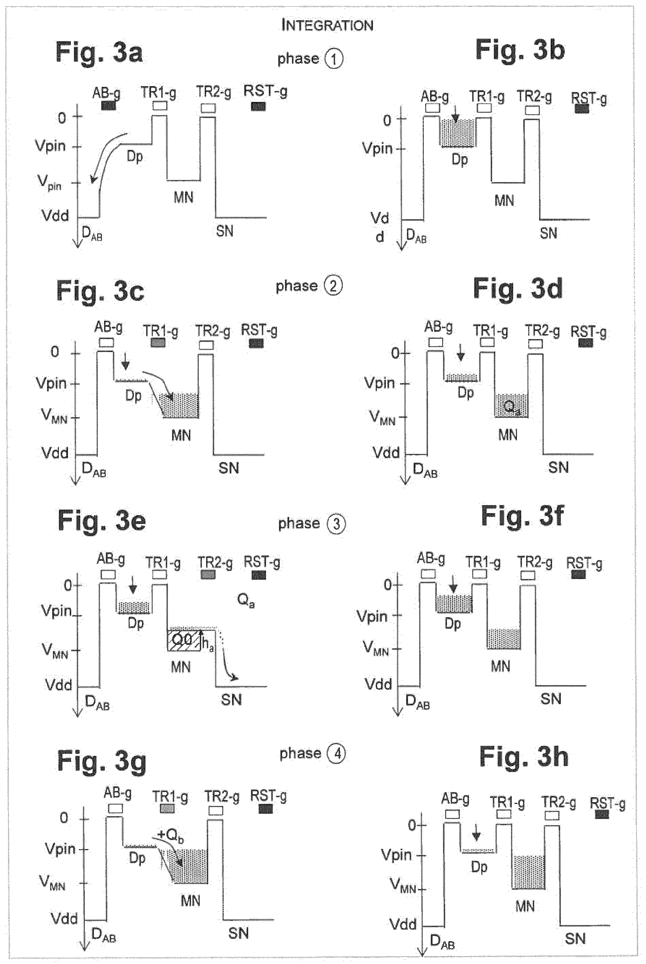

C'est ce que nous allons décrire maintenant en détail, avec l'aide du chronogramme de la figure 2 et des schémas des figures 3. Ces schémas représentent les diagrammes de potentiels dans la structure de pixel de la figure 1 pour les différentes phases ① à ⑤ de la période d'intégration dans un exemple de mise en œuvre de l'invention dans laquelle on réalise au cours de la période d'intégration, et dans tous les pixels simultanément, N=1 transfert suivi d'un (1) écrêtage des charges contenues dans le nœud mémoire.

Dans ces figures 3, les différentes grilles de transistor sont représentées par un rectangle, dont la couleur de fond est une indication de la valeur du potentiel de grille appliqué : blanc=zéro ; noir=Vdd ; gris= potentiel intermédiaire entre zéro et Vdd.

On part d'un état initial (non représenté) dans lequel les transistors de transferts sont non conducteurs. Durant la période d'intégration, le transistor d'initialisation du nœud de lecture sera généralement conducteur (grille à Vdd), reliant le nœud de lecture SN à la tension d'alimentation Vdd.

Le cycle d'intégration débute par une phase ① d'initialisation de toutes les photodiodes. Dans l'exemple, un créneau de tension Pi est appliqué sur la grille d'initialisation AB-g des photodiodes (Figs. 2 et 3a) qui rend les transistors AB d'initialisation fortement conducteurs pour vider les photodiodes de toutes leurs charges, via leurs drains D_{AB}. La fin du créneau d'initialisation Pi fait repasser ces transistors AB à l'état non conducteur et fixe l'instant t₀ de début de la période d'intégration commune aux pixels d'un nouveau cycle de prise d'image (Figure 3b).

Selon l'invention, au cours de la période d'intégration de charges par la photodiode, on prévoit au moins une séquence d'une phase ② de transfert des charges de la photodiode dans le nœud mémoire MN, à un temps intermédiaire, suivie d'une phase ③ d'écrêtage des charges contenues dans le nœud mémoire MN, avant une phase ④ de transfert final des charges dans le nœud mémoire.

Cette séquence se déroule comme suit :
- Phase ②, de transfert intermédiaire (Figures 3c et 3d) : on applique simultanément sur la première grille de transfert TR1-g de tous les pixels, un premier créneau de tension P1ₐ, à un temps t₁ après le début (temps t₀) de la période d'intégration, et la tension du créneau abaisse suffisamment la barrière de potentiel de la région semi-conductrice sous la grille TR1-g pour permettre le déversement des charges de la photodiode dans le nœud mémoire. En pratique, la tension du créneau P1ₐ sera comprise entre Vpin et Vdd et déterminée par la technologie. Toutes les charges accumulées dans la photodiode depuis le temps t₀ et que la photodiode continue à engendrer se déversent dans le nœud mémoire MN (figure 3c). A la fin de ce créneau (au temps t₂), la photodiode est à nouveau isolée du nœud mémoire et recommence à accumuler (conserver) les charges photo générées (figure 3d).
- Phase ③, d'écrêtage (Figures 3e et 3f) : après la fin du premier créneau, on applique un deuxième créneau de tension P2ₐ sur la deuxième grille de transfert TR2-g de tous les pixels, au temps t₃. La tension de ce créneau est une tension intermédiaire Vₐ qui établit une hauteur hₐ de barrière de potentiel sous la deuxième grille par rapport au potentiel V_{MN} du nœud mémoire : cette hauteur de barrière fixe une quantité de charges maximale QO qui va pouvoir être maintenue dans le nœud mémoire (figurée par le motif à tirets obliques sur la figure 3e) : les charges en excès sont évacuées vers la source d'alimentation Vdd, via le nœud de lecture SN et le transistor de réinitialisation, qui, au moins à ce moment de la période d'intégration, est commandé à l'état passant. En pratique Vₐ est une tension de préférence comprise entre 0 et V_{MN}, définie en fonction de la technologie pour obtenir le seuil QO voulu (au-delà de V_{MN}, il n'y aurait pas d'effet d'écrêtage significatif).

A la fin du deuxième créneau P2ₐ, le nœud mémoire est à nouveau complètement isolé du nœud de lecture SN, et de la photodiode (figure 3f).

On note que le nœud de lecture et le transistor de réinitialisation RST du nœud de lecture offrent un chemin d'évacuation des charges en excès du nœud mémoire naturel. Mais d'autres mises en œuvre pourraient envisager une structure d'évacuation spécifique, avec un transistor dédié, qui serait activé dans les phases actives d'écrêtage ③.

Après cette séquence de phases de transfert et écrêtage au cours de la période d'intégration, on passe à la phase ④ de transfert final, marquant la fin de la période d'intégration (Figures 3g et 3h). Dans cette phase ④, on applique, au temps t_{f}, un créneau de tension Pf sur les grilles des premiers transistors de transfert, et la fin (front de descente) de ce créneau final marque la fin de la période d'intégration pour tous les pixels, au temps t₀+ Ti. Ce créneau permet le déversement dans le nœud mémoire MN, des charges accumulées par la photodiode depuis la fin du premier créneau de transfert : ces charges s'ajoutent à celles maintenues dans le nœud mémoire à la suite des phases de transfert et d'écrêtage ② et ③ (Figure 3g), pour constituer la quantité de charges représentative du niveau de signal capturé par le pixel. C'est ce niveau qui va ensuite être lu dans la phase de lecture conduite de manière conventionnelle, de préférence avec un double échantillonnage corrélé.

La phase ② de transfert au temps t₁ au cours de la période d'intégration a pour effet de diviser la période d'intégration Tᵢ en deux durées d'intégrations successives Tiₐ et Ti_{b} ; et la phase ③ d'écrêtage suivante, effectuée à la fin de la première durée d'intégration Tiₐ, permet alors d'étendre la dynamique du pixel, c'est-à-dire la capacité à éviter la saturation du pixel en cas de fort éclairement, et ceci sans rien changer à sa sensibilité à faible éclairement.

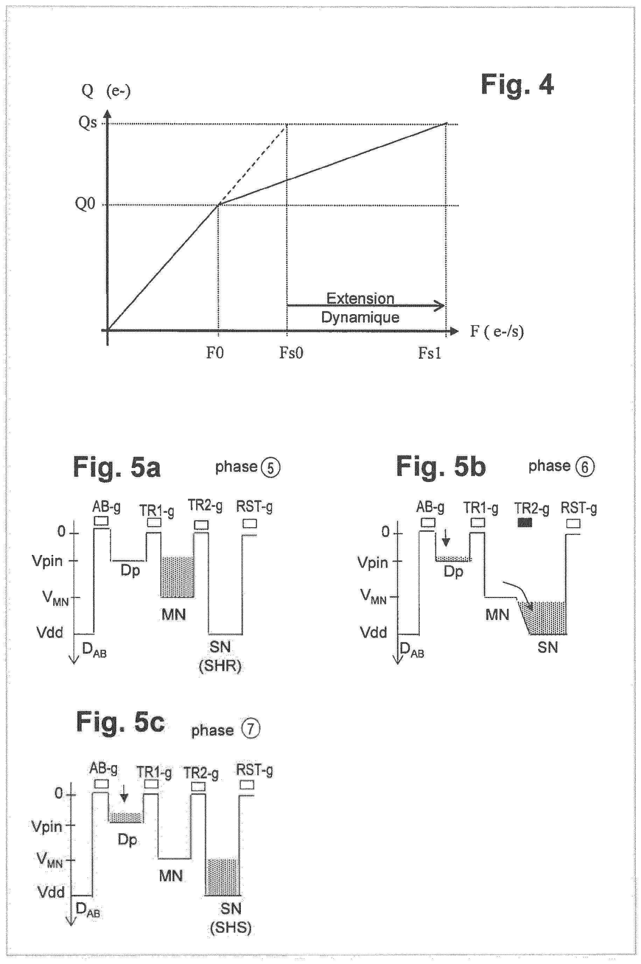

C'est ce que montre la courbe de réponse correspondante de la figure 4, qui représente la quantité de charges obtenue à la fin d'une période d'intégration, qui est donc la quantité de charges finale dans le nœud mémoire, en fonction du flux lumineux F.

En effet, de deux choses l'une :
- ou bien le flux lumineux F reçu par la photodiode dans la première période d'intégration était assez faible, aboutissant à une quantité de charges photo générées Qₐ (Figure 2) inférieure ou égale à la quantité de charges QO,
- ou bien le flux lumineux F était plus fort, supérieur à un seuil FO qui produit au bout du temps Tiₐ la quantité de charges QO.

Dans le premier cas, la quantité de charges Qₐ transférée dans le nœud mémoire dans la phase ② reste dans le nœud mémoire à la fin de la phase ③ d'écrêtage, car elle est piégée par la barrière de potentiel établie sous la deuxième grille TR2-g ; cette quantité Qₐ est proportionnelle à F et Tiₐ. L'accumulation de charges qui reprend à la fin du premier transfert et se poursuit pendant la durée Ti_{b} produit une charge Q_{b} proportionnelle à F et Ti_{b}. Dans la phase ④ de transfert final, les charges accumulées dans la photodiode au cours de la deuxième durée d'intégration Ti_{b} sont déversées dans le nœud mémoire MN et elles s'ajoutent aux précédentes : à la fin de la durée Ti_{b}, le nœud mémoire contient la quantité de charges Qₐ + Q_{b}, qui est proportionnelle à l'intensité F du flux lumineux et à la durée totale d'intégration Ti=Tiₐ+Ti_{b} ; et c'est cette quantité de charges Qₐ + Q_{b} qui sera lue dans la séquence à suivre de lecture du pixel.

Ainsi donc, lorsque le flux lumineux est inférieur au seuil FO, la quantité de charges stockée dans le pixel, qui constitue le signal de sortie du pixel, est proportionnelle à l'intensité F et à la durée totale d'intégration Ti=Tiₐ + Ti_{b}. La courbe de réponse de la charge totale Q = Qₐ + Q_{b} en fonction de F, représentée à la figure 4, possède une première section (pour E<EO) linéaire avec une pente qui est déterminée par la durée totale Ti=Tiₐ + Ti_{b}.

Dans le deuxième cas, la quantité de charges Qₐ photogénérée par la photodiode pendant la première durée d'intégration Tiₐ est supérieure au seuil QO : alors l'excédent de charges est vidé dans la phase d'écrêtage ③ ; seule la valeur de seuil QO subsiste dans le nœud mémoire à la fin de cette phase. Pendant la deuxième durée d'intégration Ti_{b}, la photodiode accumule de nouvelles charges photogénérées en quantité Q_{b} proportionnelle à l'intensité du flux F et à la durée Ti_{b}. Il en résulte qu'à la fin de la deuxième durée d'intégration Ti_{b} et à l'issue de la phase ④ de transfert final, le nœud mémoire MN comporte une quantité de charges qui est la somme Q0 + Q_{b}. En d'autre mots, la quantité de charges finale est proportionnelle à F0.Tiₐ + F.Ti_{b}, ce qui peut encore s'écrire F0.(Tiₐ+Ti_{b}) + (F-F0).Ti_{b}, dans lequel F est le flux lumineux reçu qui est supérieur à FO, et FO est le flux lumineux qui aboutit au seuil de charges QO.

La courbe de réponse au-delà de FO est donc une droite de pente plus faible, dans le rapport Ti_{b}/(Tiₐ + Ti_{b}), que la pente de la droite en dessous de FO.

Au total, la courbe de la quantité de charge totale en fonction de l'éclairement est une droite brisée à deux pentes successives, la première pente étant plus forte permettant de garder une bonne sensibilité du capteur aux faibles flux de lumière et la deuxième plus faible permettant d'étendre la dynamique du capteur aux flux intenses : Si on suppose que la photodiode sature pour une quantité de charges Qs, on voit que cette quantité de charges est atteinte pour un flux lumineux Fs1 plus élevé que si la courbe ne comportait que la première pente (auquel cas elle sature pour le flux Fs0 noté sur la figure 4). On a donc augmenté la dynamique, de Fs0 à Fs1, c'est-à-dire la capacité à éviter la saturation du pixel en cas de fort éclairement (deuxième partie de courbe), sans réduire la sensibilité à faible éclairement (première partie de courbe).

La courbe de réponse à dynamique étendue peut ainsi être réglée par les valeurs Vₐ et Ti_{b}, pour une période d'intégration de durée Ti déterminée (cette valeur Tᵢ déterminant la pente de la première droite) : le choix du potentiel Va appliqué sur la deuxième grille de transfert TR2-g dans la phase ③ détermine le point de changement de pente à la valeur choisie pour QO ; et la deuxième durée d'intégration Ti_{b}, de préférence plus courte que la première durée Tiₐ, détermine la pente de la deuxième droite. On pourra typiquement choisir une deuxième durée d'intégration Ti_{b} égale à 5 à 10% de Tiₐ.

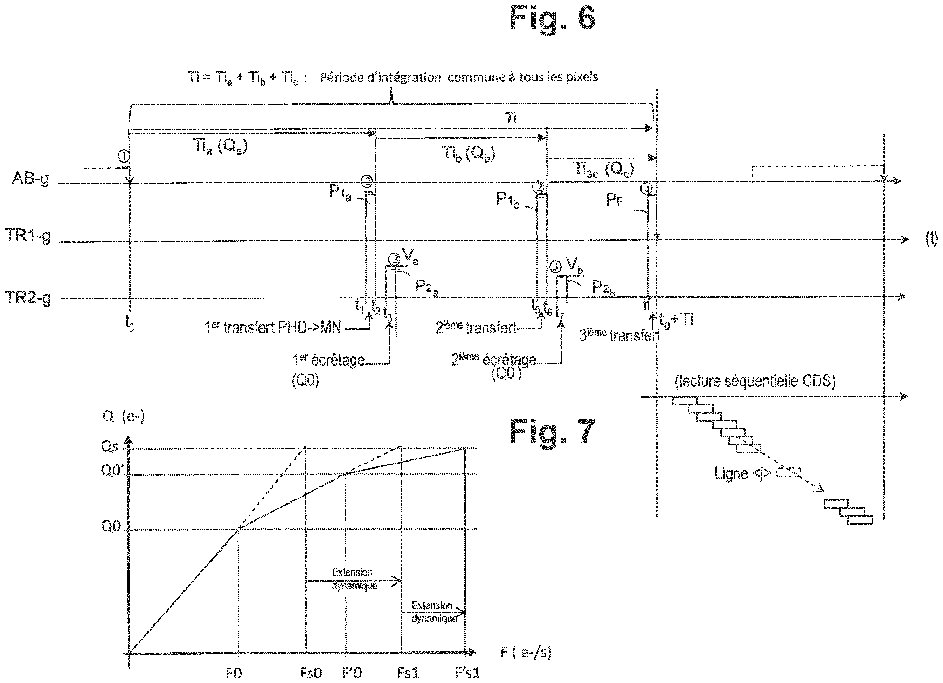

On peut généraliser à N transfert(s)/écrêtage(s) intermédiaires. Par exemple la figure 7 illustre la modification de courbe de réponse qui résulterait si un deuxième transfert/écrêtage à Q'0 était conduit après le premier transfert/écrêtage à QO, et avant le transfert final, suivant le chronogramme de la figure 6. C'est-à-dire qu'alors, dans la durée totale Ti de la période d'intégration, on répète N=2 fois la séquence des phases ② et ③ de transfert et écrêtage avant la fin de la période d'intégration. Mais la deuxième fois, on va bien sûr écrêter moins que la première fois, pour maintenir dans le nœud mémoire une charge Q'0 plus élevée que la charge QO définie par le premier écrêtage : le deuxième créneau P2_{b} appliqué aux deuxièmes grilles de transfert TR2-g a ainsi un niveau de tension V_{b} inférieur au niveau Vₐ appliqué la première fois ; ce niveau V_{b} définit une hauteur de barrière de potentiel sous ces deuxièmes grilles qui est plus élevée que la hauteur hₐ de la première séquence. La charge Q'0 ainsi définie par la tension V_{b} correspond à un deuxième seuil d'éclairement F'0. La période d'intégration Ti se décompose alors en trois durées d'intégrations successives Tiₐ, Ti_{b} et Ti_{c} qui sont de préférence de plus en plus courtes. Et la courbe de réponse comporte non plus un mais deux points de cassure, correspondant aux points (Q0, F0) et (Q'0, F'0).

Au-delà de l'éclairement F'0, et en dessous d'une valeur Fs'1 qui saturerait le pixel, la quantité de charges totale présente dans le nœud mémoire MN après le deuxième écrêtage est proportionnelle à F0.(Tiₐ+Ti_{b}+Ti_{c}) + (F'0-F0).(Ti_{b} + Ti_{c}) + (F-F'0).Ti_{c}. La première pente est définie par la durée totale d'intégration Ti; la deuxième pente est définie par la durée Ti_{b} + Ti_{c} ; la troisième pente est définie par la durée Ti_{c}. On voit sur la courbe de la figure 6 que la valeur d'éclairement de saturation F's1 peut être plus élevée que la valeur précédente Fs1, tout en conservant une sensibilité plus élevée dans la portion comprise entre FO et F'0 que si on avait choisi une pente unique directe entre le point (FO, QO) et le point de saturation (F's1, Qs).

On peut en théorie généraliser le procédé de commande à N transferts/écrêtages avant le transfert final. Mais en pratique, le choix de N=2 transferts/écrêtages est avantageux, avec une sensibilité optimisée sur toute la plage. Au-delà de N=2, on devient très contraint par la technologie dans les possibilités de fixation des seuils d'écrêtage.

On peut également prévoir que la valeur de N peut être fixée en fonction d'une mesure de l'ambiance lumineuse, de préférence entre les valeurs 1 et 2. Par exemple, on peut prévoir que N soit choisi égal à 1 dans un contexte d'ambiance lumineuse moyenne et égal à 2 dans le cas où des ambiances lumineuse plus extrêmes peuvent être mesurées.

### LECTURE

Avec la fin de la période d'intégration, la phase de lecture des pixels peut commencer. C'est une lecture séquentielle, ligne par ligne, conduite de manière habituelle selon l'état de l'art. De préférence, c'est une lecture de type à double échantillonnage corrélé. Elle est conduite de la façon suivante, comme illustré par les figures 2 et 5 :
- Chaque ligne de pixels de rang j (j= 1 à n) est sélectionnée tour à tour, par une impulsion de commande de sélection respective SEL<j>, qui est dans l'exemple appliquée sur la grille SEL-g du transistor de sélection SEL. L'effet de cette sélection pour chaque pixel de la ligne est de relier électriquement la source du transistor suiveur SF au conducteur de colonne associé, CC <k>, et donc au circuit de lecture CR en pied de colonne (Figure 1). La lecture CDS des pixels est effectuée dans ce temps de sélection, en isolant le nœud de lecture de la tension d'alimentation Vdd (en porte la grille RST-g des pixels de la ligne sélectionnée au potentiel 0) et comprend la suite de phases ⑤ à ⑦ suivantes :
- phase ⑤ : on échantillonne le potentiel de référence du nœud de lecture SN, dans le circuit de lecture en pied de colonne. Cet échantillonnage est représenté sur les figures 2 et 5a par la commande SHR.
- phase ⑥ : on rend fortement conducteur le deuxième transistor de transfert TRA₂ des pixels de la ligne sélectionnée, par un créneau de tension de niveau Vdd, appliquée sur leur grille TRA₂-g, permettant le déversement de toutes les charges maintenues dans le nœud mémoire MN dans le nœud de lecture SN (SHS, figures 2, 5b et 5c).
- phase ⑦ : A la fin de ce créneau de transfert, le potentiel du conducteur de colonne CC<k> est établi à un niveau de signal représentatif de la quantité de charges dans le nœud de lecture et ce niveau de signal est échantillonné dans le circuit de lecture en pied de colonne.

Cette séquence de lecture s'applique simultanément à tous les pixels de la ligne sélectionnée, puis se répète pour chacune des lignes de pixels du capteur, successivement, jusqu'à la dernière ligne

Une nouvelle période d'intégration d'un nouveau cycle d'intégration et lecture suivant peut démarrer avec une nouvelle phase ① de réinitialisation des photodiodes. En pratique, le nouveau cycle peut démarrer dès la fin du dernier transfert final défini par la phase ④.

Les différents signaux de commande des différentes séquences sont de manière conventionnelle fournis par un circuit de séquencement SQ des pixels de la matrice (Figure 1) à partir de signaux d'horloge et d'alimentation du capteur.

L'invention qui vient d'être décrite est particulièrement avantageuse pour les capteurs miniaturisés, si on envisage en outre de la mettre en œuvre avec des technologies de nœud mémoire qui offrent une capacité par unité de surface qui est intrinsèquement plus grande que celle permise par les technologies des photodiodes "pinned".

## Revendications

1. Procédé de prise d'image dans un capteur d'image à pixels actifs, appliquant une période d'intégration commune à tous les pixels avant une phase de lecture des pixels ligne par ligne, chaque pixel comprenant un nœud mémoire (MN) entre un élément photosensible (Dp) et un nœud de lecture (SN) du pixel, avec un premier transistor de transfert de charges (TR1) prévu entre l'élément photosensible et le nœud mémoire et un deuxième transistor de transfert de charges (TR2) prévu entre le nœud mémoire et le nœud de lecture, **caractérisé en ce qu'**à chaque nouvelle période d'intégration, le procédé comprend les étapes de commande suivantes, sur tous les pixels simultanément :
- application sur la grille de tous les premiers transistors de transfert
- d'au moins un premier créneau de tension (P1ₐ) à un temps intermédiaire (t₁) entre le début (t₀) et la fin de la période d'intégration, commandant un déversement des charges de la photodiode dans le nœud mémoire ; et
- d'un créneau de tension final (Pf) à la fin de la période d'intégration, commandant un déversement final des charges de la photodiode dans le nœud mémoire, la fin du créneau marquant la fin de la période d'intégration courante ;
- application sur la grille (TR2-g) de tous les deuxièmes transistors de transfert, d'un deuxième créneau de tension (P2ₐ) après chaque premier créneau de tension (P1ₐ) et avant le créneau de tension final (Pf), et le deuxième créneau de tension (P2ₐ) fixe une hauteur (hₐ) de barrière de potentiel sous la grille desdits deuxièmes transistors par rapport au potentiel (V_{MN}) du nœud mémoire, permettant un écrêtage des charges dans ledit nœud mémoire au-delà d'une quantité de charges maximale (QO) pouvant être maintenue dans ledit nœud mémoire.

2. Procédé selon la revendication 1, **caractérisé en ce qu'**il comprend l'application de N premiers et deuxièmes créneaux par période d'intégration, N entier, au moins égal à 1, et les N premiers créneaux de tension appliqués pendant une période d'intégration, découpent ladite période d'intégration en N+1 durées d'intégration successives, de plus en plus courtes, et les N deuxièmes créneaux de tension associés définissent N seuils d'écrêtage (Q0, Q'0) dans le nœud mémoire qui vont croissants sur la période d'intégration.

3. Procédé selon la revendication 2, **caractérisé en ce que** N=2.

4. Procédé selon la revendication 2, dans lequel N est fixé en fonction d'une mesure de l'ambiance lumineuse, de préférence à une valeur choisie parmi les valeurs 1 et 2.

5. Procédé selon l'une quelconque des revendications 1 à 4, dans lequel le moment d'application de chaque premier créneau et/ou le seuil d'écrêtage associé (Q0, Q'0) à chaque deuxième créneau sont déterminés en fonction d'une mesure de l'ambiance lumineuse.

6. Procédé selon l'une quelconque des revendications 1 à 5, dans lequel la phase de lecture de chacun des pixels d'une ligne applique un double échantillonnage corrélé pour chaque pixel, avec un premier échantillonnage (SHR) d'un niveau de référence, correspondant à une initialisation du nœud de lecture, puis un deuxième échantillonnage (SHS) d'un niveau de signal correspondant aux charges contenues dans le nœud mémoire à la fin de la période d'intégration et qui ont transférées pour la lecture dans ledit nœud de lecture.

7. Capteur d'image à pixels actifs comprenant au moins une ligne de pixels actifs, dans lequel chaque pixel actif comprend un nœud mémoire (MN) entre un élément photosensible (Dp) et un nœud de lecture (SN) du pixel, avec un premier transistor de transfert de charges (TR1) prévu entre l'élément photosensible et le nœud mémoire et un deuxième transistor de transfert de charges (TR2) prévu entre le nœud mémoire et le nœud de lecture, et un circuit de séquencement (SQ) des signaux nécessaires à une prise d'image comprenant une période d'intégration commune à tous les pixels, et une phase de lecture des pixels de chaque ligne successivement, **caractérisé en ce que** le circuit de séquencement est configuré pour mettre en œuvre un procédé de commande selon l'une quelconque des revendications 1 à 6.

## Patentansprüche

1. Verfahren zur Bildaufnahme in einem Bildsensor mit aktiven Pixeln, welches einen gemeinsamen Integrationszeitraum auf alle Pixel vor einer Phase des Lesens der Pixel Zeile für Zeile anwendet, wobei jeder Pixel einen Speicherknoten (MN) zwischen einem lichtempfindlichen Element (Dp) und einem Leseknoten (SN) des Pixels umfasst, wobei ein erster Ladungsübertragungstransistor (TR1) zwischen dem lichtempfindlichen Element und dem Speicherknoten vorgesehen ist und ein zweiter Ladungsübertragungstransistor (TR2) zwischen dem Speicherknoten und dem Leseknoten vorgesehen ist, **dadurch gekennzeichnet, dass** bei jedem neuen Integrationszeitraum das Verfahren folgende Steuerschritte, gleichzeitig an allen Pixeln, umfasst:
- Anlegen an das Gate aller ersten Übertragungstransistoren
- von mindestens einem ersten Spannungsimpuls (P1ₐ) zu einer Zwischenzeit (t1) zwischen dem Beginn (t₀) und dem Ende des Integrationszeitraums, welcher ein Einleiten der Ladungen der Photodiode in den Speicherknoten steuert; und
- eines finalen Spannungsimpulses (Pf) am Ende des Integrationszeitraums, welcher ein finales Einleiten der Ladungen der Photodiode in den Speicherknoten steuert, wobei das Ende des Impulses das Ende des laufenden Integrationszeitraums markiert;
- Anlegen an das Gate (TR2-g) aller zweiten Übertragungstransistoren, eines zweiten Spannungsuimpulses (P2ₐ) nach jedem ersten Spannungsimpuls (P1ₐ) und vor dem finalen Spannungsimpuls (Pf), und wobei der zweite Spannungsimpuls (P2ₐ) eine Höhe (hₐ) einer Potenzialbarriere unter dem Gate der zweiten Transistoren in Bezug auf das Potenzial (V_{MN}) des Speicherknotens festlegt, wodurch ein Spitzenausgleich der Ladungen in dem Speicherknoten oberhalb einer maximalen Menge von Ladungen (Q0), welche in dem Speicherknoten gehalten werden kann, ermöglicht wird.

2. Verfahren nach Anspruch 1, **dadurch gekennzeichnet, dass** es das Anlegen von N ersten und zweiten Impulsen pro Integrationszeitraum umfasst, wobei N eine Ganzzahl mindestens gleich 1 ist, und die N ersten im Verlauf eines Integrationszeitraums angelegten Spannungsimpulse den Integrationszeitraum in N+1 aufeinanderfolgende, kürzer werdende Integrationsräume aufteilen, und die assoziierten N zweiten Spannungsimpulse N Ausgleichsschwellen (Q0, Q'0) in dem Speicherknoten definieren, welche über den Integrationszeitraum ansteigen.

3. Verfahren nach Anspruch 2, **dadurch gekennzeichnet, dass** N=2 ist.

4. Verfahren nach Anspruch 2, bei welchem N angesichts einer Messung der Umgebungshelligkeit festgelegt wird, vorzugsweise auf einen Wert, welcher unter den Werten 1 und 2 gewählt wird.

5. Verfahren nach einem der Ansprüche 1 bis 4, bei welchem der Zeitpunkt des Anlegens eines jeden ersten Impulses und/oder die mit jedem zweiten Impuls assoziierten Ausgleichsschwelle (Q0, Q'0) angesichts einer Messung der Umgebungshelligkeit bestimmt wird/werden.

6. Verfahren nach einem der Ansprüche 1 bis 5, bei welchem die Lesephase eines jeden der Pixel einer Zeile eine doppelte korrelierte Abtastung für jeden Pixel anwendet, mit einer ersten Abtastung (SHR) eines Referenzpegels, welcher einer Initialisierung des Leseknotens entspricht, gefolgt von einer zweiten Abtastung (SHS) eines Signalpegels, welche den in dem Speicherknoten am Ende des Integrationszeitraums enthaltenen und zum Lesen in den Leseknoten übertragenen Ladungen entspricht.

7. Bildsensor mit aktiven Pixeln, umfassend mindestens eine Zeile aktiver Pixel, wobei jeder aktive Pixel einen Speicherknoten (MN) zwischen einem lichtempfindlichen Element (Dp) und einem Leseknoten (SN) des Pixels umfasst, wobei ein erster Ladungsübertragungstransistor (TR1) zwischen dem lichtempfindlichen Element und dem Speicherknoten vorgesehen ist und ein zweiter Ladungsübertragungstransistor (TR2) zwischen dem Speicherknoten und dem Leseknoten vorgesehen ist, und wobei ein Sequenzierungsschaltkreis (SQ) zum Sequenzieren der zu einer Bildaufnahme notwendigen Signale einen für alle Pixel gemeinsamen Integrationszeitraum umfasst, und eine Lesephase der Pixel, nacheinander für eine jede Zeile, **dadurch gekennzeichnet, dass** der Sequenzierungsschaltkreis konfiguriert ist, um ein Steuerungsverfahren nach einem der Ansprüche 1 bis 6 umzusetzen.

## Claims

1. Image capture method in an active pixel image sensor, applying an integration period common to all of the pixels before a phase of reading out the pixels, row by row, each pixel comprising a memory node (MN) between a photosensitive element (Dp) and a readout node (SN) of the pixel, with a first charge transfer transistor (TR1) placed between the photosensitive element and the memory node and a second charge transfer transistor (TR2) placed between the memory node and the readout node, **characterized in that**, in each new integration period, the method comprises the following control steps, across all of the pixels simultaneously:
- applying, to the gate of all of the first transfer transistors:
- at least one first voltage pulse (P1ₐ) at an intermediate voltage (t₁) between the start (t₀) and the end of the integration period, controlling a transfer of charge from the photodiode to the memory node; and
- a final voltage pulse (Pf) at the end of the integration period, controlling a final transfer of charge from the photodiode to the memory node, the end of the pulse marking the end of the current integration period;
- applying, to the gate (TR2-g) of all of the second transfer transistors, a second voltage pulse (P2ₐ) after each first voltage pulse (P1ₐ) and before the final voltage pulse (Pf), and the second voltage pulse (P2ₐ) setting a potential barrier height (hₐ) under the gate of said second transistors in relation to the potential (V_{MN}) of the memory node, allowing the charge in said memory node beyond a maximum amount of charge (Q0) that can be held in said memory node to be clipped.

2. Method according to Claim 1, **characterised in that** it comprises the application of N first and second pulses per integration period, N being an integer at least equal to 1, and the N first voltage pulses applied during an integration period divide said integration period into N+1 successive integration durations of increasingly smaller length, and the N second associated voltage pulses define N clipping thresholds (Q0, Q'0) in the memory node which keep increasing over the integration period.

3. Method according to Claim 2, **characterized in that** N = 2.

4. Method according to Claim 2, in which N is set according to a measurement of the ambient light, preferably at a value chosen between 1 and 2.

5. Method according to any one of Claims 1 to 4, in which the time of application of each first pulse and/or the clipping threshold (Q0, Q'0) associated with each second pulse are determined according to a measurement of the ambient light.

6. Method according to any one of Claims 1 to 5, in which the phase of reading out each of the pixels of one row applies a correlated double sampling for each pixel, with a first sampling (SHR) of a reference level, corresponding to an initialization of the readout node, then a second sampling (SHS) of a signal level corresponding to the charge which is contained in the memory node at the end of the integration period and which has been transferred to said readout node for readout.

7. Active pixel image sensor comprising at least one row of active pixels, in which each active pixel comprises a memory node (MN) between a photosensitive element (Dp) and a readout node (SN) of the pixel, with a first charge transfer transistor (TR1) placed between the photosensitive element and the memory node and a second charge transfer transistor (TR2) placed between the memory node and the readout node, and a sequencing circuit (SQ) for sequencing the signals required for image capture comprising an integration period common to all of the pixels, and a phase of successively reading out the pixels of each row, **characterised in that** the sequencing circuit is configured to implement a control method according to any one of Claims 1 to 6.
